# EUROPÄISCHE PATENTSCHRIFT

(11) **EP 3 756 265 B1**
(45) Veröffentlichungstag und Bekanntmachung des Hinweises auf die Patenterteilung: **18.11.2026**
(21) Anmeldenummer: 19708936.0
(22) Anmeldetag: 22.02.2019
(51) Int. Cl.: H02J 7/35

(54) **VERWENDUNG EINER ENERGIEVERSORQUNGSEINRICHTUNG FÜR ELEKTRISCHE KLEINGERÄTE SOWIE ELEKTRISCHE SCHALTUNGEN**
USE OF A POWER SUPPLY DEVICE FOR ELECTRICAL CIRCUITS AND SMALL ELECTRICAL APPLIANCES
UTILISATION D'UN DISPOSITIF D'ALIMENTATION EN ÉNERGIE POUR PETITS APPAREILS ÉLECTRIQUES AINSI QUE CIRCUITS ÉLECTRIQUES

(30) Priorität: 23.02.2018 DE 102018104136; 09.05.2018 DE 102018111156
(43) Veröffentlichungstag der Anmeldung: 30.12.2020
(73) Patentinhaber: Enerthing GmbH, 51379 Leverkusen (DE)
(72) Erfinder: LENZE, Martin, 50389 Wesseling (DE); NIGGEMANN, Michael, 40625 Düsseldorf (DE)
(74) Vertreter: Janke Scholl Patentanwälte PartG mbB
(86) Internationale Anmeldenummer: PCT/DE2019/100171
(87) Internationale Veröffentlichungsnummer: WO 2019/161851

(56) Entgegenhaltungen:
- WO-A1-2013/169959
- DE-A1- 102009 029 934
- US-A- 5 331 183
- US-A1- 2017 163 212
- ANONYMOUS: "Fullerenes help electrons travel further in organic solar cells - Materials Today", 1 February 2018 (2018-02-01), XP055839736, Retrieved from the Internet <URL:https://www.materialstoday.com/energy/news/fullerenes-electrons-organic-solar-cells/> [retrieved on 20210909]
- PANG SHANGZHENG ET AL: "Efficient bifacial semitransparent perovskite solar cells with silver thin film electrode", SOLAR ENERGY MATERIALS AND SOLAR CELLS, vol. 170, 20 May 2017 (2017-05-20), pages 278 - 286, XP085108785, ISSN: 0927-0248, DOI: 10.1016/J.SOLMAT.2017.05.071

## Beschreibung

Die vorliegende Erfindung betrifft die Verwendung einer Energieversorgungseinrichtung für elektrische Kleingeräte sowie elektrische Schaltungen, welche ein Photovoltaikelement umfassen.

Elektrische und elektronische Kleingeräte, die in Wohnungen und in der Industrie eingesetzt werden, beispielsweise Sensoren und Sender, ausgestattet mit einem Funkmodul zur Datenübertragung, sind vielfach mit Batterien ausgestattet. Zu diesen Geräten zählen Funksensoren, Beacons, Bewegungsmelder, Smart-Home Geräte, etc.

Es gibt bereits photovoltaisch betriebene Geräte für Innenraumanwendungen am Markt, beispielsweise Solar-Beacons und Solar Funk-Multideckensensoren. In diesen findet zumeist amorphes Silizium auf Glas Substraten Anwendung. Die Module werden in das Gehäuse integriert und bekommen somit auch einen mechanischen Schutz. Die Richtung, aus der Licht absorbiert werden kann ergibt sich aus der Einbaulage der Geräte.

Durch Sammeln kleinster Mengen von Energie aus Licht in Innenräumen (light energy harvesting) mittels Photovoltaik im Milliwatt- und sub-Milliwattbereich können kleine, oftmals vernetzte Geräte unabhängig von Primärbatterien mit Energie versorgt werden.

Für die kommenden Jahre wird dem Internet der Dinge (IoT) ein großes Wachstum vorhergesagt. Weltweit sollen bis 2021 14 bis 22 Milliarden Geräte abgesetzt werden, Wachstumsraten von 23 - 33% jährlich werden prognostiziert. Bei einem signifikanten Anteil wird es sich um Klein- und Kleinstgeräte handeln. Ein elektrischer Netzanschluss verursacht hohe Installationskosten. Primärbatterien sind derzeit die am weitesten verbreitete Energiequelle, jedoch führt die endliche Kapazität dazu, dass ein Batteriewechsel erforderlich ist. Kritisch sind dabei weniger die Kosten der Batterie als vielmehr die mit dem Austausch der Batterie verbundenen Wartungskosten. Um eine möglichst langen Batteriebetrieb zu gewährleisten wird oftmals die Leistungsfähigkeit, wie z.B. Sendeleistung, des Gerätes eingeschränkt. In Innenräumen stellt Licht oftmals eine ausreichende Energiequelle dar, die zum Betrieb einer Vielzahl von loT Geräten in Smart Homes, dem Einzelhandel oder industriellen Anwendungen genutzt werden kann.

Will man Photovoltaik im Innenraum von Gebäuden einsetzen, so ist die Lichtquelle zumeist LED- oder Fluoreszenzlicht. Typische Beleuchtungsstärken für Kunstlichtquellen in Innenräumen variieren zwischen wenigen zehn bis einigen tausend Ix. Die Beleuchtungsstärken sind im Vergleich zur solaren Bestrahlung (von einigen Hundert bis 1000 W/m²) 100 bis 1000-mal geringer.

Die existierenden Photovoltaiktechnologien sind unterschiedliche geeignet für Kunstlicht- und Schwachlichtanwendungen. Die Höhe der Konversionseffizienz von Lichtenergie in elektrische Energie einer Photovoltaikzelle ist abhängig von der Lage der Valenz- und Leitungsbänder (Energieniveaus) des verwendeten Halbleiters und dem Spektrum der Lichtquelle. Photovoltaikzellen basierend auf Monochristallinem- oder Polychristallinem Silizium wie sie primär für solare Anwendungen eingesetzt werden, zeigen bei den niedrigen Beleuchtungsintensitäten von 100 bis 1000 Ix sehr geringe Konversionseffizienzen, sodass Leistungen von weniger als 5 µW cm⁻² bei 200 Ix (LED oder Fluoreszenzbeleuchtung) erreicht werden. Insbesondere die ohnehin schon geringe offene Klemmenspannung der meisten Zelltypen von etwa 600 mV bei solarer Bestrahlung (1000 W/m²) nimmt bei den geringen Lichtintensitäten aufgrund steigender Rekombinationsverluste weiter deutlich ab.

Der Großteil kommerziell erhältlicher Photovoltaikmodule ist so aufgebaut, dass Licht nur von einer Seite absorbiert und in Energie umgewandelt werden kann. Die Rückseite der Photovoltaikzellen oder Module ist oftmals metallisiert. Semitransparente Photovoltaikmodule für Solare Anwendungen im Außenbereich sind ebenfalls bekannt. Diese werden beispielsweise in Fassaden von Gebäuden eingesetzt.

Die Beleuchtungssituation in Innenräumen unterscheidet sich nicht nur durch die spektrale Zusammensetzung des Lichtes (LED und Fluoreszenz Kunstlicht oder eine Mischung aus Kunst und Tageslicht), sondern insbesondere in der Verteilung der Lichtintensität. Im Außenbereich liegt bei klarem Himmel und ohne verschattende Elemente wie Häuser oder Bäume direktes Sonnenlicht vor. Hier kann die Lichtquelle als weit entfernte Punktquelle angesehen werden und das Licht kommt daher aus einer Richtung. Bei bewölktem Himmel und bei Verschattung durch Gebäude nimmt der Diffusanteil des natürlichen Lichtes zu. Oftmals ergibt sich im Außenbereich eine Kombination aus Direkt- und Diffusstrahlung. In Innenräumen ist die Beleuchtung aus reinem Kunstlicht oder aus Mischlicht in der Regel diffus. Die Verteilung des Lichts resultiert aus der Position und Orientierung der Leuchtquellen (Punktstrahler, Flächenstrahler etc.) und den streuenden Reflexionen an Oberflächen (Wände, Boden, Decke, Einrichtungselemente). Daraus resultiert oftmals eine gleichmäßige Verteilung des Diffusanteils des Lichtes.

Die Positionierung von Geräten (Sensoren, Beacons, Tags, etc.) wird oftmals in Hinblick auf eine optimale Funktion des Gerätes, oder auch aus ästhetischen Gesichtspunkten durchgeführt. So befinden sich Bewegungssensoren an der Wand oder an der Decke. Beacons sollten außerhalb der Reichweite, jedoch nicht deutlich höher als 3 m positioniert werden um eine optimale Abdeckung zu gewährleisten. Diese Anforderungen lassen oftmals keine optimale Ausrichtung zu einer Lichtquelle zu.

Gegenstand der vorliegenden Erfindung ist die Verwendung einer Energieversorgungseinrichtung, welche ein bifaziales Photovoltaikmodul umfasst, zur Energieversorgung von elektrischen Kleingeräten sowie elektrischen Schaltungen in Innenräumen.

Durch den Einsatz eines bifazialen Photovoltaikmoduls ist es möglich, die Konversionseffizienz des zur Verfügung stehenden Lichtes in elektrische Energie deutlich zu steigern. Ein weiterer Vorteil ist, dass das Photovoltaikmodul nicht ausschließlich in die Richtung ausgerichtet werden muss, aus welcher das künstliche Licht kommt. Es kann Licht aus mindestens zwei Richtungen aufgenommen werden. So kann bei gleicher Photovoltaikfläche im Vergleich zu einem Modul mit Rückseitenreflektor eine Erhöhung der generierten Leistung erzielt werden. Die erfindungsgemäß verwendete Energieversorgungseinrichtung eignet sich insbesondere für die Energieversorgung von elektrischen Kleingeräten und Schaltungen, d.h. von Geräten und Schaltungen, die elektrischen Strom benötigen und in Innenräumen eingesetzt werden. Unter dem Begriff elektrische Kleingeräte und Schaltungen werden auch elektronische Kleingeräte und Schaltungen verstanden.

Unter einem photovoltaischen Modul im Sinne der vorliegenden Erfindung werden sowohl photovoltaische Zellen, also Einzelzellen, als auch verschaltete Zellen verstanden. Werden verschaltete Zellen verwendet, so sind diese vorzugsweise seriell verschaltet.

In einer besonders bevorzugten Ausführungsform weist das Photovoltaikmodul eine flexible Photovoltaikfolie auf. Um die eigentliche Photovoltaikfolie vor Einflüssen von außen, wie Wasser oder auch Sauerstoff, zu schützen kann diese von sog. Barrierefolien umschlossen sein. Diese Ausführungsform hat den Vorteil, dass eine höhere Sicherheit bietet, keine Gefahr des Glasbruches und daraus resultierender Verletzungen besteht.

Gegenüber der Verwendung von zwei Photovoltaikmodulen mit reflektierenden Rückelektroden (Orientierung der spiegelnden Rückelektroden zueinander) hat ein bifaziales Modul mit zwei transparenten Elektroden einen deutlichen Kostenvorteil. Über die Dicke der photoaktiven Schicht zwischen den Elektroden wird das Verhältnis zwischen Absorption und Transmission bestimmt. Für eine maximale Ausbeute in der bifazialen Konfiguration ist es vorteilhaft, die Schichtdicke so zu wählen, dass die Lichtabsorption von beiden Seiten maximiert und die Verluste durch Rekombination der Ladungsträger in der Photovoltaikzelle minimiert werden. Wie bereits oben erläutert, ist der diffuse Anteil des Lichts in Innenräumen sehr hoch, sodass der Lichteinfall auf die photoaktive Schicht aus allen Richtungen erfolgt, sodass in vielen Fällen eine Lichtverteilung und somit auch eine Energieaufnahme von 360 Grad angenommen werden kann.

Im Gegensatz zu Anwendungen, in denen eine Durchsicht eine wesentliche Eigenschaft ist, steht für das freistehende bifaziale Modul die Energieausbeute im Vordergrund. Bei halbleitenden Materialien mit hohen Ladungsträgerbeweglichkeiten und geringen Rekombinationen sind große Schichtdicken von einigen hundert Nanometern bis zu Mikrometern (300nm und 2000 nm) der photoaktiven Schicht ohne deutliche Verluste in der Effizienz möglich.

In einer möglichen Ausführungsform hat das Photovoltaikmodul im Wellenlängenbereich von 400 nm bis 850 nm eine mittlere Lichttransmission von weniger als 20%, in manchen Anwendungen auch weniger als 10% und insbesondere weniger als 5%, das bedeutet, das photovoltaische Modul kann eine sehr geringe Lichttransmission aufweisen und auch nahezu lichtundurchlässig sein.

In einer weiteren Ausführungsform hat das photovoltaische Modul im Wellenlängenbereich von 400 nm bis 850 nm eine mittlere Lichttransmission von mehr als 20% hat.

Die photoaktive Schicht sollte nicht zu dick sein. Die Absorption nimmt zwar zu, die elektrischen Verluste steigen jedoch ab einer gewissen Dicke an. Einen weiteren Vorteil bietet das freistehende Modul in Hinblick auf das Design und die Installation in Gebäuden (Gebäudesensoren). Gehäuseintegrierte Photovoltaikmodule zeigen oftmals in den Innenraum und können aufgrund der dunklen Licht-absorbierenden Photovoltaikfläche auf den Betrachter störend wirken. Ein freistehendes, bifaziales Modul kann so im Raum orientiert werden, dass es auch den Hauptbetrachtungsrichtungen nur unter flachem Winkel auf die Kante sichtbar wird. Aufgrund der beidseitigen Lichtabsorption kann über streuende Oberflächen (Wände) Licht absorbiert werden.

Die erfindungsgemmäß verwendeten photovoltaischen Module können auf aus dem Stand der Technik für Anwendungen bei Kunstlicht bekannten Hallbleiter basieren. Geeignete Halbleiter sind beispielsweise amorphes Silizium (a-Si). Diese sind zumeist auf Glas-Substraten aufgebaut. Es gibt jedoch auch Varianten auf Kunststoffsubstraten. Typische Flächenbezogene Leistungen von a-Si Modulen betragen 4 bis 5 µW cm⁻² bei 200 Ix (LED oder Fluoreszenzbeleuchtung). Die Modulgrößen können zwischen wenigen Quadratzentimetern bis zu einigen zehn Quadratzentimetern liegen.

Eine weitere bekannte Photovoltaiktechnologie bei Schwachlicht basiert auf Galliumarsenid (GaAs), mit welcher Leistungen von 15 µW cm⁻² bei 200 Ix erreicht werden können. Aufgrund des aufwändigen Herstellungsverfahrens sind Photovoltaikmodule auf Basis von GaAs weniger bevorzugt.

Vereinzelt werden auch sog. Farbstoffsolarzellen für Schwachlichtanwendungen verwendet, die bei 200 Ix eine flächenbezogene Leistung von ca. 15 µW cm⁻² erreichen können. Farbstoff solarzellen (Dye-senitized solar cells), basieren auf einer nanoporösen Titandioxid-Schicht, welche oftmals mit einem Ruthenium-Farbstoffmolekül belegt ist. Die Löcherleitung erfolgt oftmals durch ein Elektrolyt Redox-System.

Gemäß der Erfindung weisen die Photovoltaikmodule organische Halbleiter auf. In einer bevorzugten Ausführungsform werden sogenannte Donor-Akzeptorsysteme verwendet. Dieses wird aus einem Gemisch aus mindestens zwei Materialien mit unterschiedlichen Energieniveaus gebildet. Durch Auswahl der Energieniveaus HOMO (Highest occupied moelcular orbital) und LUMO (lowest unoccupied molecular orbital) ist eine Anpassung des Materialsystems an die Lichtquelle und somit eine Erhöhung der Energieausbeute möglich. Die Schichtsysteme für die organische Photovoltaik können sowohl durch vakuumbasierte Verfahren als auch durch Aufbringen aus Lösung auf einem Trägersubstrat abgeschieden werden. Dabei bietet die lösungsmittelbasierte Herstellung einen klaren Kostenvorteil bei einer großvolumigen Produktion. Für mögliche Schwachlichtanwendungen wurden im Bereich der organischen Photovoltaik bisher primär für solare Anwendungen konzipierte Halbleitermaterialien und Zelleaufbauten verwendet. In eigenen Experimenten konnten wir bisher flächenbezogene Leistungen von maximal 8.5 µW cm⁻² bei 200lx mit Fulleren-basierten Donor-Akzeptor Systemen erzielen.

Gemäß der Erfindung sind die organischen Halbleitermaterialien ausgewählt aus konjugierten Polymeren (Elektronendonatoren) und Fullerenen bzw. Nicht-Fullerenen (Elektronenakzeptoren).

Geeignete Materialien für Akzeptormaterialien sind insbesondere Nicht-Fulleren-Akzeptoren, beispielsweise substituierte Indacenodithiophene wie IDTBR, ITIC (3,9-bis[2-(3-oxo-2-vinyl-2,3-dihydroinden-1-ylidene)-malononitrile]-5,5,11,11-tetrakis(4-hexylphenyl)-dithieno[2,3-d:2',3'-d']-sindaceno[1,2-b:5,6-b']dithiophene, IEICO oder IDIC, Indacenofluorene wie IDFBR, Fluorene wie FBR ((5Z,50Z)-5, 50-{(9,9-dioctyl-9H-fluorene-2,7-diyl)bis[2,1,3-benzothia-diazole-7,4-diyl(Z)methylylidene]}bis(3-ethyl-2-thioxo-1,3-thiazolidin-4-one)), FTTB und beliebige Gemische der voranstehenden.

Beispiele für das Donormaterial sind organische Materialien ausgewälhlt aus Polythiophenen wie P3HT (Poly-3-Hexylthiphen) oder PDCBT, J61 (Poly[[5,6-difluoro-2-(2-hexyldecyl)-2H-benzotriazole-4,7-diyI]-2,5-thiophenediyl[4,8bis[5-(dodecylthio)-2-thienyl]benzo[1,2-h:4,5-h'] dithiophen-2,6-diyl]-2,5-thiophenediyl]), J51, J52, PBDB-T (Poly[(2,6-(4,8-bis(5-(2-ethylhexyl)thiophen-2-yl)-benzo[1,2-b:4,5-b']dithiophene))-alt-(5,5-(1',3'-di-2-thienyl-5',7'-bis(2-ethylhexyl)benzo[1',2'-c:4',5'-c']dithiophene-4,8-dione)]), PTZ1, PTB7 (Poly[[4,8-bis[(2-ethylhexyl)oxy]benzo[1,2-b:4,5-b']dithiophene-2,6-diyl][3-fluoro-2-[(2-ethylhexyl)carbonyl]thieno[3,4-b]thiophenediyl]]), PTB7-Th (Poly[4,8-bis(5-(2-ethylhexyl)thiophen-2-yl)benzo[1,2-b;4,5-b']dithiophene-2,6-diyl-alt-(4-(2-ethylhexyl)-3-fluorothieno[3,4-b]thiophene-)-2-carboxylate-2-6-diyl)]) und beliebige Gemische der voranstehenden.

Geeignete Kombinationen aus den vorangegangenen Donoren und Akzeptoren sind insbesondere P3HT:IDTBR, P3HT:FBR, P3HT:IDTBR:FBR, P3HT:IDFBR, P3HT:IDFBR:FBR, P3HT:IDTBR:IDFBR, P3HT:FTTB, PDCBT:IDTBR, PDCBT:FBR, PDCBT:IDTBR:FBR, PDCBT:IDFBR, PDCBT:IDFBR:FBR, PDCBT:IDTBR:IDFBR, PDCBT:FTTB, J61:ITIC, J51:ITIC, J52:ITIC, PBDB-T:IDTBR, PBDB-T:FBR, PBDB-T:IDFBR, PBDB-T:FTTB, PBDB-T:ITIC, PBDB-T:IDIC, PTB7-Th:IDTBR, PTB7-Th:FBR, PTB7-Th:IDTBR:FBR, PTB7-Th:IDFBR, PTB7-Th:IDFBR:FBR, PTB7-Th:IDTBR:IDFBR, PTB7-Th:ITIC und PTB7-Th:FTTB. Weitere geeignete Halbleiter sind sogenannte Organo-Perowskitsolarzellen (Chen et al. Adv. Funct. Mater. 2015, 25, 7064-7070), die bei Beleuchtungsstärken von 100 Ix Leistungen von mehr als 6 µW cm⁻² erreichen können.

Wegen der begrenzten Fläche eines verwendeten Photovoltaikelements und dem steigenden Energiebedarf von Kleingeräten sollte die Leistung pro Fläche (µW/cm²) bei Einstrahlbedingungen zwischen 100 und 500 Ix möglichst hoch sein. Die Wirtschaftlichkeit bei der Auswahl der Technologie spielt bei der Art dieser Massenprodukte (Beacons, Tags, Sensoren) eine große Rolle.

Ein Kriterium für die Eignung von Photovoltaikelementen für geringe Lichtintensitäten ist die Größe des flächenbezogenen Parallelwiderstandes Rp (auch Parallel-Innenwiderstand genannt). Im erfindungsgemäß verwendeten Photovoltaikelement beträgt der Parallelwiderstand vorzugsweise mehr als 20 kΩcm² bezogen auf die Einzelzelle, da mit einem solchen Parallelwiderstand bei Beleuchtungsstärken von 1000 Ix hohe Konversionseffizienzen erzielt werden können.

Um den störungsfreien Betrieb des Systems zu gewährleisten, ist es bei unzureichender Versorgung durch Primärenergie (Künstliches Licht oder Tageslicht) möglich, in einem für den Nutzer akzeptablen Rahmen die Leistung und dementsprechend den Energieverbrauch des Gerätes zu reduzieren. Dies kann beispielsweise durch eine Verringerung der Datenübertragungsrate erfolgen. Eine weitere Möglichkeit ist es, ggf. für einen begrenzten Zeitraum, die Menge der zugeführten Primärenergie zur erhöhen. Dies kann durch Messen und "Nachregeln" der künstlichen Beleuchtung oder der Steuerung von Tageslicht durch Jalousien, etc. erfolgen.

Für den möglichst störungsfreien Betrieb weist die erfindungsgemäße Energieversorgungseinrichtung in einer möglichen Ausführungsform ein oder mehrere Photovoltaikmodule, einen Energiespeicher, ggf. einen oder mehrere Lichtsensoren, eine elektronische Schaltung für das Energie- und Signalmanagement, ein Funkmodul sowie eine Schnittstelle zur Energieversorgung von elektrischen Geräten und Schaltungen auf.

In einer möglichen Ausführungsform der vorliegenden Erfindung wird der Ladestatus und/oder Beleuchtungsstärke gemessen und über eine Funkverbindung an ein Energiemanagement-System gesendet. Das Energiemanagement erfolgt üblicherweise über eine geeignete Software, die vorzugsweise auch an ein System für die Gebäudesteuerung angeschlossen ist. Wird über das Energiemanagement festgestellt, dass der Ladestatus zu niedrig ist und/oder die Beleuchtungsstärke zu gering ist, kann über die Gebäudesteuerung die künstliche oder natürliche Beleuchtung erhöhen.

Ein weiterer Gegenstand der vorliegenden Erfindung ist ein elektrisches Kleingerät, welches mindestens ein bifaziales Photovoltaikelmodul, einen Energiespeicher und Vorrichtungen zum Laden des Energiespeichers aufweist.

In den beigefügten Figuren zeigen
- Figur 1: den Schichtaufbau eines bifazialen Photovoltaikmoduls,
- Figur 2: ein Photovoltaikmodul aus bestehend aus monolithisch verschalteten Photovoltaikzellen
- Figur 3: ein Kleingerät mit bifazialem Photovoltaikmodul
- Figur 4: Adaption eines Kleingerätes mit bifazialem Modul an ein Lampengehäuse
- Figur 5: Kleingerät mit bifazialem Photovoltaikmodul
- Figur 6: ein Diagramm mit Darstellung der Verknüpfung der einzelnen Komponenten.

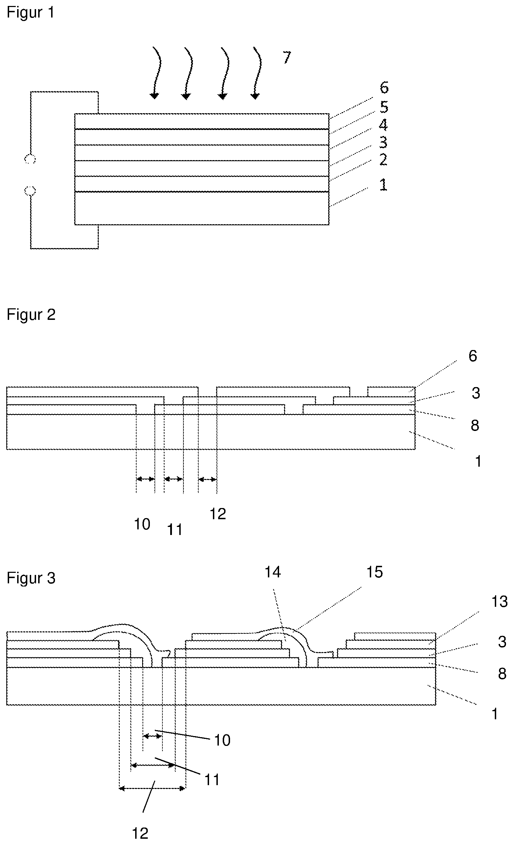

Ein bevorzugter Aufbau eines bifazialen Photovoltaikmoduls für die Energieversorgung von elektrischen bzw. elektronischen Kleingeräten, die Strom benötigen, ist in Figur 1 dargestellt. Das Modul weist ein Substrat 1 aus einem flexiblen Polymermaterial, beispielsweise Polyethylenterephthalat (PET), welches mit einer transparenten Mehrfachschicht-Elektrode 2 beschichtet ist. Diese Elektrode besteht aus einem Metalloxid/Metall Schichtaufbau. Dadurch ist eine hohe mechanische Flexibilität gewährleistet. Als Injektionsschicht für Elektronen werden beispielsweise Zink-Oxid Nanopartikel 3 verwendet. Typische organische Halbleitermaterialien sind P3HT (Poly-3-Hexylthiophen) und ([6,6]-Phenyl-C61-Buttersäuremethylester) C₆₀-PCBM als Akzeptor 4. Typische Löcherkontaktschichten sind poly(3,4-ethylenedioxythiophen) Polystyrolsulfonat (PEDOT:PSS) 5. Als transparente leitfähige Elektrode 6 kann beispielsweise eine Beschichtung aus Silber-Nanodrähten dienen. Der Lichteinfall von beiden Seiten ist mit 7 gekennzeichnet.

Figur 2 ist ein sogenanntes monolithisch verschaltetes Photovoltaikmodul dargestellt, d.h. ein Modul in welchem mehrere Photovoltaikzellen elektrisch miteinander verbunden sind. Um höhere elektrische Spannungen als die Einzelzelle zu erzielen, können Teilflächen, wie in Figur 8 dargestellt, durch Strukturierung miteinander verschaltet werden. Schematisch sind hier das Substrat 1, die transparente Elektrode 6, die photoaktive Schicht 3, sowie die obere Elektrode 13 dargestellt. Die Grenzflächenschichten sind nicht dargestellt. Die Verschaltung der Einzelzellen zu einem Modul erfolgt über die Strukturierungslinien P1 (10), P2 (11) und P3 (12). In dieser Konstellation werden die Einzelschichten nach Ihrer Deposition sequenziell strukturiert.

Eine weitere Ausführung in Figur 3 zeigt einen Querschnitt durch ein Photovoltaikmodul. Im Gegensatz zu dem in Figur 2 beschriebenen Aufbau erfolgt die Strukturierung 10, 11, 12 der transparenten Substratelektrode 8, der photoaktiven Schicht 3 und der Grenzflächenschicht 13 erst nach der Abscheidung aller Schichten. Die Grenzflächenschicht 13 kann aus einer oder mehreren PEDOT:PSS Schichten mit unterschiedlicher Flächenleitfähigkeit bestehen. Die Strukturierung der Schichten 8, 3 und 13 führt zu den Separationen 10, 11 und 12. Die Verschaltung der Einzelzellen zu einem Modul erfolgt hier durch die Schicht 6. Dabei handelt es sich um Nanodrähte aus Silber oder eine Beschichtung aus kohlenstoffbasiertem Material wie Graphen, Carbon Black oder Graphit. Um einen elektrischen Kurzschluss bei der nachträglichen Verschaltung zu vermeiden muss die exponierte transparente Elektrode auf der Seite, die nicht kontaktiert werden soll, mit einer dielektrischen Schicht 14 bedeckt werden. Geeignete dielektrische Materialien sind gelöstes Polystyrol, UV-vernetzende Kleber.

Der Vorteil dieses Modulaufbaus und des damit verbundenen Herstellungsprozesses ist die geringere Anfälligkeit des Moduls auf elektrische Kurzschlüsse, die durch Partikel und Entnetzungen in der Nähe der Strukturierungslinie P1 entstehen können. Insbesondere ist die Schichtqualität auf unstrukturierten Substraten höher als auf vorstrukturierten Substraten. Bei ausreichender Flächenleitfähigkeit der Grenzflächenschicht 13 kann der Überlapp der Verschaltungsschicht 15 und der Grenzflächenschicht 13 reduziert werden, sodass die Wahrscheinlichkeit für Kurzschlüsse zwischen der transparenten Elektrode 8 durch Löcher in der photoaktiven Schicht 3 und der Verschaltungsschicht 15 weiter reduziert wird. Dies ist einem hohen Parallelwiderstand und somit einer hohen Effizienz unter Schwachlicht zuträglich.

Aus dem Stand der Technik ist bekannt, zumeist Glas-basierte Photovoltaikmodule aus amorphem Silizium in das Gehäuse von Kleingeräten zu integrieren. Die Beleuchtung der Module mit einer reflektierenden Rückseitenelektrode erfolgt von einer Seite. Durch eine bifaziale Ausführung der Photovoltaikfolie mit zwei transparenten Elektroden und einer Integration in das Gerät, derart dass sich ein freistehendes Photovoltaikmodul ergibt, kann die Energieausbeute in Innenraumanwendungen deutlich erhöht werden.

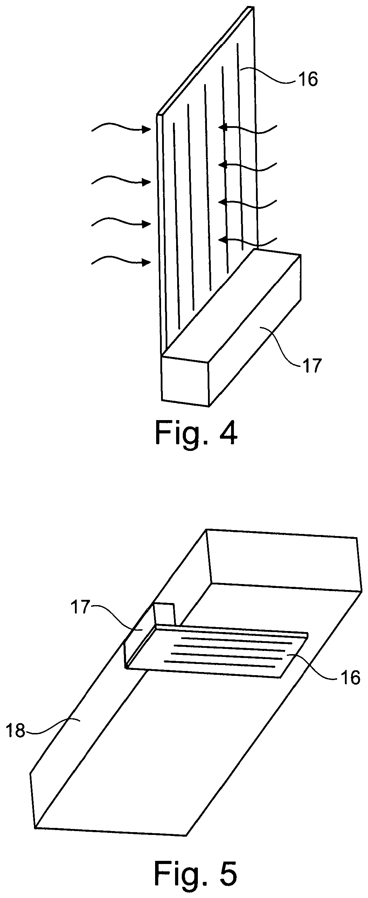

In Figur 4 ist ein elekronisches Kleingerät 17 mit einem bifazialen Photovoltaikmodul 16 dargestellt. Durch Ausführung des freistehenden Moduls mit zwei transparenten Elektroden kann eine Semitransparenz und die Absorption von Licht von mehreren Seiten erreicht werden. Der Grad der Semitransparenz (bzw. Transmission in %) und die Absorptionsfähigkeit werden primär durch die Dicke der photoaktiven Schicht eingestellt.

Im Gegensatz zur Positionierung von Kleingeräten 17 unabhängig vom Ort der Lichtquelle kann die Positionierung nahe zur Lichtquelle von Vorteil in Bezug auf einer Versorgung mit ausreichend Lichtenergie sein. In Figur 5 zeigt ein Lampengehäuse 18 mit einem bifazialen Photovoltaikmodul 16. Nahe am Leuchtmittel kann die Lichtintensität mehrere 1.000 - 10.000 Ix betragen. Durch direkte Adaption an das Leuchtmittel wird eine "verlässliche" Energiequelle zur Energieversorgung des Kleingerätes genutzt. Aufgrund der hohen Lichtintensität nahe am Leuchtmittel ist im Vergleich zur Positionierung des Photovoltaikmoduls in größerem Abstand (im Raum) eine höhere Energiedichte (Lux-Wert) vorhanden. Somit kann bei gleichem Energiebedarf des Gerätes 17, beispielsweise ein Sensor oder Beacon (Pos 3 Figur 5) eine kleine Photovoltaikfläche verwendet und somit die Kosten für das System reduziert werden.

Mit einem semi-transparenten Modul ist es möglich, einen Teil des Lichtes zu absorbieren und für das betriebene Gerät zu nutzen, ohne das Leuchtmittel vollständig lokal abzuschatten. Dies bietet insbesondere einen ästhetischen Vorteil, da das Auge bei direkter Betrachtung des Leuchtmittels eine Teilabschwächung kaum registriert (Augenempfindlichkeit). Die Adaption der semitransparenten Photovoltaikfolie kann direkt an oder in das das Lampengehäuse, als auch an das Leuchtmittel geschehen. Neben der Anwendung in Innenräumen ist auch eine Anwendung an Außenbeleuchtungen attraktiv. Wird das Kleingerät mit bifazialer Photovoltaikfolie an eine Außenleuchte oder Straßenbeleuchtung adaptiert, kann tagsüber Tageslicht und in den Abendstunden Kunstlicht zum Betrieb des Kleingerätes genutzt werden. Anwendungen sind insbesondere Sensoren zur Messung von Umweltparametern. Der Vorteil gegenüber der Energieversorgung über den Stromanschluss der Lampe ist die einfachere und kostengünstigere Integration.

Kleingeräte wie Fenster- und Türsensoren werden oftmals in unmittelbarer Nähe transparenter Glasflächen betrieben. Mit einem bifazialen Photovoltaikmodul kann Licht aus beiden Raumbereichen, beziehungsweise natürliches Licht von Außen und künstliches Licht von Innen zur Energieerzeugung genutzt werden.

Für den Betrieb von Geräten unter Schwachlicht mittels Photovoltaik werden häufig unflexible, ebene Photovoltaikmodule aus Glas verwendet. Diese müssen zur Vermeidung von Glasbruch in ein Gehäuse integriert werden. Eine flexible Photovoltaikfolie hat den Vorteil, dass sie mechanisch so robust ist, dass eine Integration in ein Gehäuse nicht erforderlich ist (Figur 4).

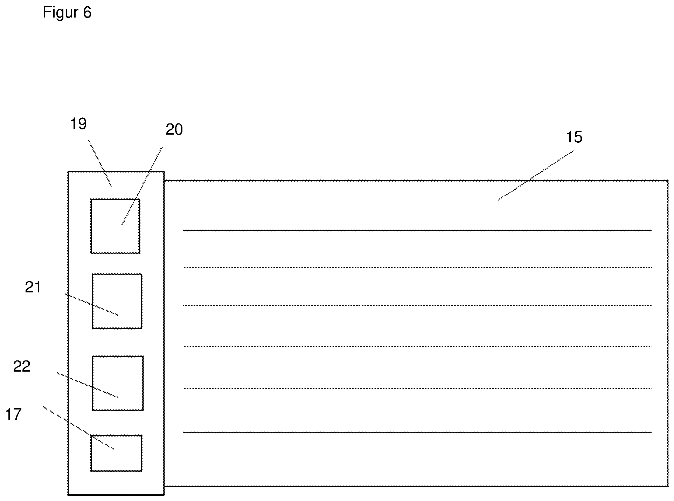

In der in Figur 6 dargestellten Ausführungsform weist die Elektronikkomponente eine Ladeschaltung, einen Speicher, und einspezifisches Gerät 17 (Beacon, Sensor, etc.) auf. Diese Elektronikkomponente kann in einem separaten Gehäuse 19 untergebracht oder mit in den Folienverbund einlaminiert werden. Durch die räumliche Separation von Photovoltaikmodul 16 und Elektronikkomponente 17 mit einem Funkmodul 22 wird eine Abschirmung der Strahlungsleistung des Funkmoduls 22 durch die leitfähigen Schichten des Photovoltaikmoduls 16 verhindert. Die externe Platzierung des Photovoltaikmoduls außerhalb des Sensorgehäuses erlaubt einen späteren Austausch des Photovoltaikmoduls z.B. mit einem Upgrade auf eine höhere Modulleistung und somit kleinere Fläche oder auf eine an die gegebenen Lichtverhältnisse und veränderten Energieverbräuche des Sensors angepasste Modulfläche.

Das energieautarke Kleingerät aus Figur 6 besteht aus den folgenden Komponenten: Flexibles bifaziales Photovoltaikmodul 16 mit einem Gehäuse 19 angeschlossen an eine Lademanagement Schaltung 20 und Speicher 21. Diese Lademanagementschaltung ist angeschlossen an die Elektronik des Kleingerätes 17. Der Speicher 21 kann ein Kondensator oder Superkondensator als auch ein Akkumulator oder eine Kombination aus diesen Sekundärspeichern sein. Zusätzlich kann der Speicher eine Primärbatterie umfassen. Diese wird mit einem Sekundärspeicher kombiniert und dient als Backup. Die Lademanagementschaltung versorgt das Kleingerät über eine entsprechende Schaltung mit einer definierten Spannung. Gängige Typen von Lademanagement-Schaltungen sind ADP5091 von Analog Devices, BQ25504 von Texas Instruments oder EP CBC915-ACA von Cymbet.

Das Lademanagement und der Sekundärspeicher kann auf einer separaten Platine ausgeführt sein und mittels Kabeln oder über die Batteriefederkontakte des Kleingerätes angeschlossen werden. Alternativ kann das Lademanagement und der Speicher auf der Platine des Kleingerätes integriert sein. Das elektrische Kleingerät kann mit einem Funkmodul und ggf. Sensoren 22 ausgerüstet sein.

In einigen Anwendungen kann eine Separation des Gerätes vom Photovoltaikmodul erforderlich sein, z. B. wenn eine bestimmte Positionierung des Gerätes im Raum erforderlich ist (z.B. Bewegungsmelder), die Lichtquelle jedoch an einer anderen Stelle positioniert ist. Der Abstand zwischen Photovoltaikmodul und Gerät kann über transparente Elektrodenfolien überbrückt werden.

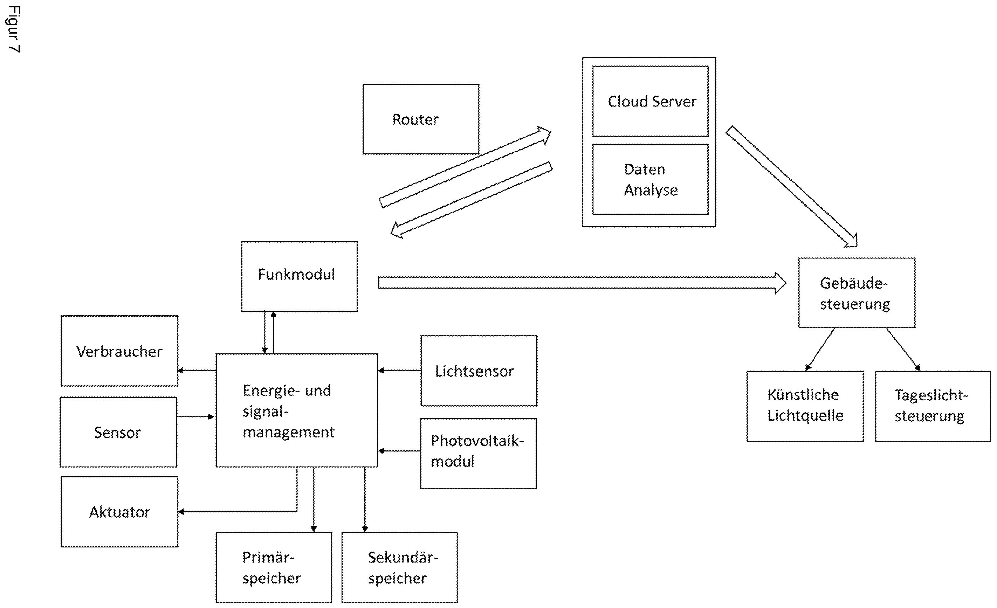

Figur 7 zeigt ein Diagramm, in welchem die Verknüpfung der einzelnen Komponenten dargestellt ist. Die Versorgung des Energieversorgungssystems mit Primärenergie in der Form von Licht kann direkt über eine Photozelle oder durch Messung des Stromes des Photovoltaikmoduls bestimmt werden. Eine Information über den Ladezustand der Speicher (Sekundärspeicher und optional ein Primärspeicher) kann über die Energiemanagementschaltung gewonnen werden. Diese Informationen können über das Energie- und Signalmanagement und ein Funkmodul an einen Empfänger gesendet werden. Der Empfänger der Information ist ein Gebäude- oder Infrastruktur-Managementsystem. Zuvor kann die Information aufbereitet werden. Das Gebäude-Managementsystem verarbeitet die Information und regelt über das Ein- oder Aus-Schalten von Lichtquellen und/oder Jalousien oder Markisen die Menge der zur Verfügung stehenden Primärenergie für das Energieversorgungssystem. Es entsteht somit ein adaptiver Mess- und Regelkreis, der es ermöglicht, die Betriebssicherheit des an das Energieversorgungssystem angeschlossenen Gerätes zu erhöhen. Zwischen Funkmodul des Energieversorgungssystems und Empfänger können die Informationen auf mehrfache Weise und ggf. mit einer Aufbereitung übertragen werden.

In einer Ausführung sendet das Funkmodul die Messdaten des Lichtsensors und oder des Ladezustands direkt an das Gebäudemanagementsystem. Die Funktechnologie ist eine dem Fachmann bekannte Technologie und kann ausgewählt werden aus z.B. Zigbee, Z-Wave, Enocean, Bluetooth, Wlan o.ä.

In einer weiteren Ausführung sendet das Funkmodul die Daten über Funk an ein Hub Device (Router) und dieses wiederum über eine Internetverbindung an das Gebäude-Managemensystem.

In einer weiteren möglichen Ausführung sendet das Funkmodul die Daten an einen Cloud-Server. Die verwendeten Standards sind SIGFOX, LTE-CatM1 oder NB-IoT. Von dort werden die Daten über eine weitere Internetverbindung an das Gebäudemanagement gesendet.

Es ist auch möglich, die Messdaten vor der Weiterleitung an das Gebäudemanagement aufzubereiten. Aus diesen Daten können Grenzwert-Warnungen abgeleitet oder Entwicklungen vorhergesagt werden. Entsprechend der Vorhersagen kann eine frühzeitige, vorausschauende Wartung durch einen Service-Anbieter erfolgen ("*Predictive Maintenance*").

### Bezugszeichenliste

- 1: Substrat
- 2: Mehrfachschicht-Elektrode (untere Elektrode)
- 3: Photoaktive Schicht
- 4: Akzeptor
- 5: Löcherkontaktschicht
- 6: transparente leitfähige Elektrode (obere Elektrode)
- 7: Lichteinfall
- 8: transparente Elektrode
- 9: obere Elektrode
- 10: Strukturierungslinie
- 11: Strukturierungslinie
- 12: Strukturierungslinie
- 13: Grenzflächenschicht
- 14: dielektrische Schicht
- 15: Verschaltungsschicht
- 16: bifaziales Modul
- 17: elektrisches Kleingerät
- 18: Lampengehäuse
- 19: Gehäuse
- 20: Lademanagement
- 21: Sekundärspeicher
- 22: Funkmodul

## Patentansprüche

1. Verwendung einer Energieversorgungseinrichtung, welche ein bifaziales Photovoltaikmodul (16) umfasst, zur Energieversorgung von elektrischen Kleingeräten (17) sowie elektrischen Schaltungen in Innenräumen, **dadurch gekennzeichnet, dass** das Photovoltaikmodul eine photoaktive Schicht (3) aus organischen Halbleitermaterialien aufweist, wobei die organischen Halbleitermaterialien aus konjugierten Polymeren (Elektronendonatoren) und Fullerenen bzw. Nicht-Fullerenen (Elektronenakzeptoren) ausgewählt sind.

2. Verwendung nach Anspruch 1, **dadurch gekennzeichnet, dass** das Photovoltaikmodul eine flexible Photovoltaikfolie ist.

3. Verwendung nach Anspruch 1 oder 2, **dadurch gekennzeichnet, dass** das Photovoltaikelement im Wellenlängenbereich von 400 nm bis 850 nm eine mittlere Lichttransmission von weniger als 20% hat.

4. Verwendung nach Anspruch 3, **dadurch gekennzeichnet, dass** die mittlere Transmission weniger als 10%, insbesondere weniger als 5% beträgt.

5. Verwendung nach Anspruch 1 oder 2, **dadurch gekennzeichnet, dass** das Photovoltaikmodul im Wellenlängenbereich von 400 nm bis 850 nm eine mittlere Lichttransmission von mehr als 20% hat.

6. Verwendung nach einem der Ansprüche 1 bis 5, **dadurch gekennzeichnet, dass** das Photovoltaikmodul einen Parallelwiderstand Rp von mehr als 20 kΩcm² bezogen auf die Einzelzelle aufweist.

7. Verwendung nach einem der Ansprüche 1 bis 6 **dadurch gekennzeichnet, dass** einen oder mehrere Energiespeicher, einen oder mehrere Lichtsensoren, eine elektronische Schaltung für das Energie- und Signalmanagement, ein Funkmodul sowie eine Schnittstelle zur Energieversorgung von elektrischen Geräten aufweist.

8. Verwendung nach Anspruch 7, **dadurch gekennzeichnet, dass** der Ladestatus und/oder die Beleuchtungsstärke gemessen und über eine Funkverbindung an ein Energiemanagement System gesendet werden.

9. Elektrisches Kleingerät (17), welches eine Energieversorgungseinrichtung nach einem der Ansprüche 1 bis 7, einen Energiespeicher (21) und Vorrichtungen zum Laden des Energiespeichers aufweist.

10. Elektrisches Kleingerät nach Anspruch 9, **dadurch gekennzeichnet, dass** mehrere bifaziale Photovoltaikelmodule elektrisch miteinander verbunden sind.

11. Elektrisches Kleingerät nach Anspruch 10, **dadurch gekennzeichnet, dass** die Verbindung der bifazialen Photovoltaikelmodule durch Nanodrähte aus Silber über eine dielektrische Passivierung freigelegter transparenter Substratelektroden erfolgt.

12. Elektrisches Kleingerät nach einem der Ansprüche 9 bis 11 **dadurch gekennzeichnet, dass** das Gerät einen Funksender und/oder Sensoren umfasst.

## Claims

1. Use of a power supply device comprising a bifacial photovoltaic module (16) for supplying power to small electrical appliances (17) and electrical circuits in indoor spaces, **characterized in that** the photovoltaic module comprises a photoactive layer (3) made of organic semiconductor materials, wherein the organic semiconductor materials are selected from conjugated polymers (electron donors) and fullerenes or non-fullerenes (electron acceptors).

2. Use according to claim 1, **characterized in that** the photovoltaic module is a flexible photovoltaic film.

3. Use according to claim 1 or 2, **characterized in that** the photovoltaic element has an average light transmission of less than 20% in the wavelength range from 400 nm to 850 nm.

4. Use according to claim 3, **characterized in that** the average transmission is less than 10%, in particular less than 5%.

5. Use according to claim 1 or 2, **characterized in that** the photovoltaic module has an average light transmission of more than 20% in the wavelength range from 400 nm to 850 nm.

6. Use according to any one of claims 1 through 5 **characterized in that** the photovoltaic module has a parallel resistance Rp of more than 20 kΩ·cm² relative to the individual cell.

7. Use according to any one of claims 1 through 6, **characterized in that** it comprises one or more energy storage devices, one or more light sensors, an electronic circuit for energy and signal management, a wireless module, and an interface for supplying power to electrical devices.

8. Use according to claim 7, **characterized in that** the charge status and/or illuminance are measured and transmitted via a wireless connection to an energy management system.

9. Small electrical device (17) comprising a power supply device according to any one of claims 1 through 7, an energy storage device (21), and means for charging the energy storage device.

10. Small electrical device according to claim 9, **characterized in that** multiple bifacial photovoltaic modules are electrically connected to one another.

11. Small electrical device according to claim 10, **characterized in that** the bifacial photovoltaic modules are connected via silver nanowires through a dielectric passivation layer of exposed transparent substrate electrodes.

12. Small electrical device according to any one of claims 9 through 11, **characterized in that** the device comprises a radio transmitter and/or sensors.

## Revendications

1. Utilisation d'un dispositif d'alimentation en énergie, comprenant un module photovoltaïque bifacial (16), pour l'alimentation en énergie de petits appareils électriques (17) ainsi que de circuits électriques en intérieur, **caractérisée en ce que** le module photovoltaïque comporte une couche photoactive (3) constituée de matériaux semi-conducteurs organiques, lesdits matériaux semi-conducteurs organiques étant choisis parmi des polymères conjugués (donneurs d'électrons) et des fullerènes ou des non-fullerènes (accepteurs d'électrons).

2. Utilisation selon la revendication 1, **caractérisée en ce que** le module photovoltaïque est une feuille photovoltaïque flexible.

3. Utilisation selon la revendication 1 ou 2, **caractérisée en ce que** l'élément photovoltaïque présente une transmission lumineuse moyenne inférieure à 20 % dans la gamme de longueurs d'onde comprise entre 400 nm et 850 nm.

4. Utilisation selon la revendication 3, **caractérisée en ce que** la transmission moyenne est inférieure à 10 %, en particulier inférieure à 5 %.

5. Utilisation selon la revendication 1 ou 2, **caractérisée en ce que** le module photovoltaïque présente une transmission lumineuse moyenne supérieure à 20 % dans la gamme de longueurs d'onde comprise entre 400 nm et 850 nm.

6. Utilisation selon l'une des revendications 1 à 5 **caractérisée en ce que** le module photovoltaïque présente une résistance en parallèle Rp supérieure à 20 kΩcm² par rapport à la cellule individuelle.

7. Utilisation selon l'une des revendications 1 à 6 **caractérisée en ce qu'**elle comprend un ou plusieurs dispositifs de stockage d'énergie, un ou plusieurs capteurs de lumière, un circuit électronique pour la gestion de l'énergie et des signaux, un module radio ainsi qu'une interface pour l'alimentation en énergie d'appareils électriques.

8. Utilisation selon la revendication 7, **caractérisée en ce que** l'état de charge et/ou l'intensité lumineuse sont mesurés et transmis via une liaison radio à un système de gestion de l'énergie.

9. Petit appareil électrique (17) comprenant un dispositif d'alimentation en énergie selon l'une des revendications 1 à 7, un accumulateur d'énergie (21) et des dispositifs pour charger l'accumulateur d'énergie.

10. Petit appareil électrique selon la revendication 9, **caractérisé en ce que** plusieurs modules photovoltaïques bifaciaux sont reliés électriquement entre eux.

11. Petit appareil électrique selon la revendication 10, **caractérisé en ce que** la connexion des modules photovoltaïques bifaciaux s'effectue au moyen de nanofils d'argent via une passivation diélectrique d'électrodes de substrat transparentes mises à nu.

12. Petit appareil électrique selon l'une des revendications 9 à 11 **caractérisé en ce que** l'appareil comprend un émetteur radio et/ou des capteurs.
